# FASCICULE DE BREVET EUROPEEN

(11) **EP 0 566 491 B1**
(45) Date de publication et mention de la délivrance du brevet: **11.09.1996**
(21) Numéro de dépôt: 93400982.0
(22) Date de dépôt: 15.04.1993
(51) Int. Cl.: A01B 17/00, A01C 23/02

(54) **Dispositif pour injecter dans le sol des produits volatils**
Vorrichtung zum Einbringen von flüchtigen Wirkstoffen in den Boden
Implement for injecting volatile products into the ground

(30) Priorité: 15.04.1992 FR 9204626
(43) Date de publication de la demande: 20.10.1993
(73) Titulaire: JAVERLHAC, Jean-Charles, Guimps, F-16300 Barbezieux (FR)
(72) Inventeur: JAVERLHAC, Jean-Charles, Guimps, F-16300 Barbezieux (FR)
(74) Mandataire: Nony, Michel

(56) Documents cités:
- FR-A- 1 018 290
- FR-A- 2 409 676
- GB-A- 1 180 320

## Description

La présente invention a pour objet un dispositif pour injecter dans le sol des produits volatils.

On sait que l'on est amené à injecter dans le sol cultivé des produits volatils tels que des engrais ou des désinfectants destinés à éliminer les mirco-organismes qui peuvent nuire à la culture.

On utilise à cet effet des dispositifs qui sont constitués généralement par des coutres verticaux qui comportent par exemple à leur partie arrière un tube par lequel arrive le produit volatil qui ainsi se dégage à la partie inférieure du coutre.

Compte tenu du caractère volatil du produit ainsi injecté, il est nécessaire de prévoir immédiatement en arrière du coutre un autre dispositif qui referme la lente que le coutre laisse dans le sol après son passage, faute de quoi, une partie importante du produit volatil remonte et s'échappe à l'air libre.

Le document FR-A-1018290 décrit l'injection d'un fluide volatil dans le sol à l'aide d'un coutre de faible épaisseur qui n'exerce aucune action de labour dans le sol.

Le document GB-A-1180320 décrit une charrue à socs multiples répartis en deux groupes basculables autour d'un axe horizontal, qui comporte des dispositifs d'injection de fluide volatil au niveau des versoirs. Cette charrue présente l'inconvénient que les sections de terre retournées par le labour prennent appui les unes sur les autres d'une manière non étanche ce qui provoque une déperdition importante du fluide volatil.

Le document FR-A-2409676 décrit un dispositif pour fendre le sol, soulever un côté du terrain et déposer dans la fente un produit d'addition à l'aide d'une canalisation flexible. Ce dispositif entraîne une perte importante du produit volatil que l'on désire enterrer.

Il en résulte que l'on doit remorquer le dispositif qui assure la fermeture des lentes laissées par les coutres, ce qui augmente le coût de l'énergie de traction.

La présente invention résulte de la combinaison d'un engin de labour du type dans lequel la terre se trouve brisée par un déplacement latéral ou vers le haut qui lui communique son foisonnement, avec une canalisation placée sur le dispositif en question qui amène le produit volatil à un endroit situé en dessous de la masse de terre qui est soumise au foisonnement et qui retombe spontanément après le passage de l'engin de labour en évitant toute communication du produit volatil avec l'atmosphère.

La présente invention permet donc de réaliser par un seul passage une opération de labour et une opération de traitement à l'aide d'un produit volatil sans avoir à refermer les traces des dispositifs d'amenée du produit volatil.

La présente invention a pour objet un engin de labour, caractérisé par le fait qu'il comporte en combinaison au moins une lame destinée à s'enfoncer dans le sol, dont la partie supérieure est sensiblement parallèle à la direction du labour et dont la partie inférieure est déportée latéralement de manière à briser le terrain au dessus de la lame et à provoquer son foisonnement; et au moins un tube incorporé à chacune de ces lames qui permet d'envoyer un produit volatil en un ou plusieurs points disposés à la partie basse de chaque lame.

Selon un mode de réalisation préféré de l'invention, on utilise des lame hélicoïdales qui ont une forme telle qu'en allant du haut vers le bas de la lame cette denière s'écarte de plus en plus du plan vertical de la partie haute de la lame et fait avec ce plan un angle de plus en plus prononcé.

Dans une variante, on utilise de telles lames hélicoïdales qui comportent à leur base un aileron faisant saillie en s'écartant de la convexité de la lame, qui comporte également un tube aboutissant à l'extrémité de l'aileron pour déposer le produit volatil en deux points distincts.

Dans une autre variante on peut utiliser des lames rectilignes inclinées par rapport à la verticale et qui forment en allant vers le bas un angle de plus en plus grand avec la direction du labour.

Dans une autre variante, il est également possible d'utiliser des lames comportant une partie verticale en forme de coutre qui est prolongée dans le bas par une partie sensiblement horizontale qui est inclinée vers le bas en direction du labour de manière à provoquer une désagrégation de la terre par le soulèvement de cette dernière.

La combinaison selon l'invention d'au moins un tube d'injection de produit volatil avec chaque lame de ce type d'engin de labour présente l'avantage de réaliser en une seule opération un travail utile de la terre et l'injection dans cette dernière de produits volatils tels que des engrais ou des produits destinés à détruire des micro-organismes.

Cette combinaison de deux opérations simultanées n'est possible que par le fait que le type d'engin de labour choisi selon l'invention permet de désagréger la terre sans avoir à la retourner, comme le font les engins de labour conventionnels les plus répandus.

En effet, avec de tels engins, le produit volatil qui a été injecté à la partie basse se retrouve au voisinage de la surface ce qui entraîne son évaporation et sa perte dans l'atmosphère.

C'est la raison pour laquelle il n'a pas été possible jusqu'à ce jour de réaliser dans des conditions satisfaisantes l'injection de produits volatils en même temps que le labour.

Dans le but de mieux faire comprendre l'invention, on va en décrire maintenant à titre d'illustration et sans aucun caractère limitatif plusieurs modes de réalisation représentés sur le dessin dans lequel :
- la figure 1 est une vue en perspective d'une lame hélicoïdale selon l'invention,
- la figure 2 est une vue en perspective à plus grande échelle de la partie inférieure de la lame de la figure 1,
- la figure 3 est une vue en élévation à plus grande échelle de la partie basse arrière de la lame de la figure 1,
- la figure 4 est une vue arrière d'un deuxième mode de réalisation de l'invention,
- la figure 5 est une vue en élévation arrière d'un troisième mode de réalisation de l'invention, et
- la figure 6 est une vue en coupe selon VI-VI de la figure 5.

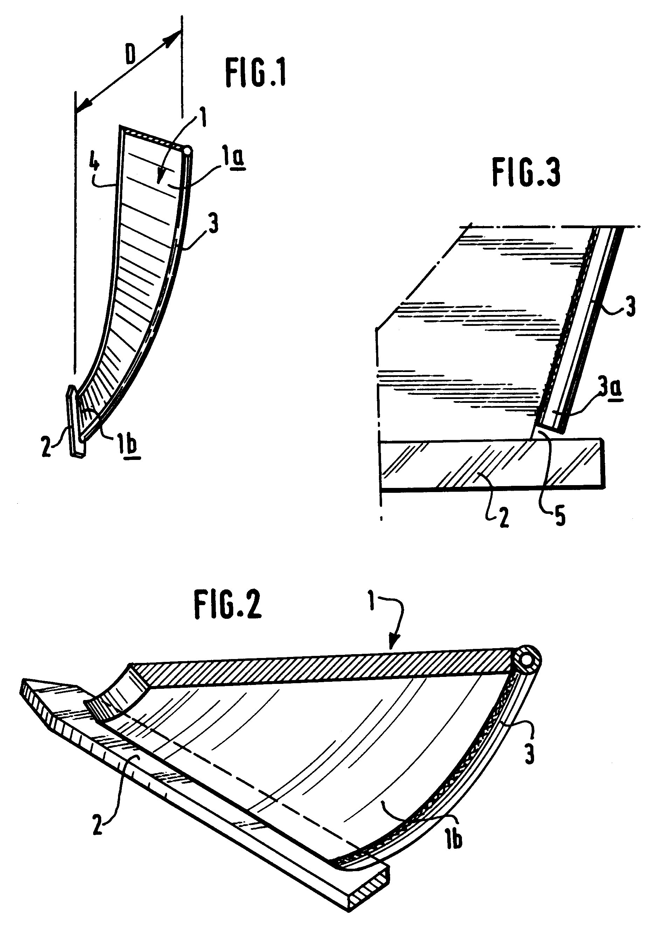

On a représenté sur les figures 1 à 3 une lame hélicoïdale 1 d'un engin de labour de type connu.

Cette lame est caractérisée par le fait qu'alors que sa partie supérieure 1a est dirigée dans le plan du labour, en se déplaçant de sa partie supérieure 1a vers sa partie inférieure 1b elle forme un angle de plus en plus important avec la direction du labour, tandis qu'elle s'écarte de plus en plus du plan dans lequel se trouve la partie supérieure 1a ceci jusqu'à une distance D.

A la manière connue, un soc 2 est fixé à la partie inférieure de la lame 1.

Conformément à l'invention, un tube 3 est soudé le long du bord arrière de la lame 1 qui présente à la manière connue un biseau 4 sur son bord avant.

Le tube 3 présente avantageusement un diamètre inférieur ou au plus égal à l'épaisseur de la lame 1 comme on peut le voir clairement sur la figure 3.

L'extrémité inférieure 3a du tube débouche en 5 au voisinage du soc 2.

Bien entendu la partie supérieure du tube 3 est reliée au réservoir de produit volatil lequel, lors du labour, est amené à la partie basse de la lame 1 en s'échappant en 5.

Conformément à l'invention, on dispose avantageusement une pluralité de telles lames côte-à-côte sur un engin de labour de manière à traiter une surface de terrain suffisante à chaque passage.

Grâce au mode de travail des lames qui viennent d'être décrites la terre se trouve brisée sans être retournée, de telle sorte que la fente laissée par la lame 1 se trouve immédiatement comblée après le passage de l'engin de labour, ce qui évite au produit volatil de remonter vers la surface du sol.

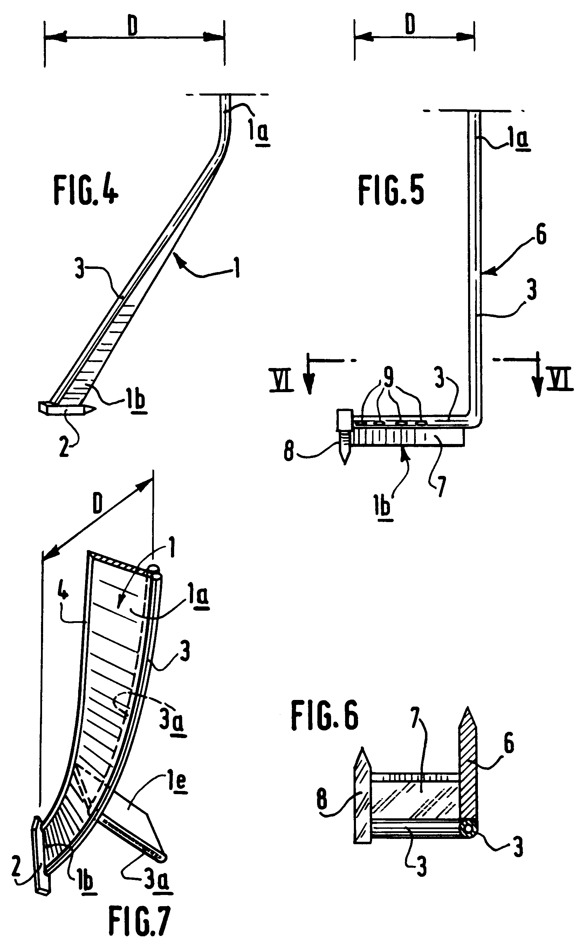

On a représenté sur la figure 4 un autre mode de réalisation de la lame de la figure 1 dans lequel, au lieu d'avoir une forme hélicoïdale, la lame a un profil rectiligne incliné tel que sa partie inférieure s'écarte de la distance D de sa partie supérieure, tandis que l'angle que fait la lame avec le plan de sa partie supérieure 1a augmente du haut vers le bas. Comme dans le mode de réalisation précédent, on assujettit un tube 3 à la partie arrière de la lame 1 pour permettre l'introduction dans le sol du produit volatil.

Dans le mode de réalisation des figures 5 et 6, la lame 1 est constituée par une partie verticale 6 en forme de coutre qui est fixée à sa partie supérieure 1a et qui supporte à sa partie inférieure 1b une pièce sensiblement horizontale 7 terminée par un soc 8.

La pièce horizontale 7 est inclinée vers le bas en direction du labour de manière à soulever la terre qui se trouve au dessus d'elle et à provoquer sa dislocation.

Comme dans les modes de réalisation précédents, on fixe un tube 3 à la partie arrière de la lame, ce tube débouchant par exemple dans des orifices multiples 9 disposés au voisinage de la partie horizontale 7.

De cette manière, le produit volatil qui est envoyé par le tube 3 se dégage à l'arrière de la lame après quoi, il est immédiatement emprisonné dans le terrain par la terre désagrégée qui retombe à l'arrière de la lame 7.

On a représenté sur la figure 7 un autre mode de réalisation selon lequel on utilise une lame hélicoïdale telle que celle de la figure 1, mais en lui adjoignant un aileron 1e disposé à sa partie inférieure et faisant saillie à partir de la face convexe de la lame qui comporte un premier tube 3 comme décrit au sujet de la figure 1 et un second tube 3a qui part du haut de la lame pour aboutir à l'extrémité de l'aileron 1e.

On peut ainsi travailler une surface de sol plus importante en répartissant mieux le produit volatil.

Comme on le voit, l'invention permet d'une manière simple et économique de réaliser à la fois un labour et l'injection dans le sol d'un produit volatil.

On économise ainsi un coût important en main d'oeuvre et en énergie de traction, d'une part en économisant un passage, et d'autre part en évitant d'avoir à traîner des dispositifs qui referment les fentes laissées par les organes qui étaient jusqu'à ce jour utilisés pour enfouir des fluides volatils dans le sol.

Il est bien entendu que les modes de réalisation décrits ci-dessus ne comportent aucun caractère limitatif et qu'ils pourront être adaptés sans sortir pour cela du cadre de l'invention.

En particulier, il est clair que si on le désire on peut placer sur les lames davantage de tubes, soit pour injecter dans le sol différents produits volatils, soit pour mieux répartir ces derniers à la base des lames.

## Revendications

1. Engin de labour qui comporte en combinaison une pluralité de lames (1) destinées à s'enfoncer dans le sol, dont la partie supérieure (1a) est parallèle à la direction du labour et dont la partie inférieure (1b) est déportée latéralement de manière à briser le terrain au dessus de la lame et à provoquer son foisonnement; et des tubes (3) incorporés à chacune des lames (1) qui permettent d'envoyer un produit volatil en un ou plusieurs points (5,9) disposés à la partie basse de chaque lame.

2. Engin selon la revendication 1, caractérisé par le fait que les lames (1) ont une forme telle qu'en allant du haut vers le bas de la lame cette dernière s'écarte de plus en plus du plan vertical de la partie haute (1a) de la lame et fait avec ce plan un angle de plus en plus prononcé.

3. Engin selon la revendication 1 ou 2, caractérisé par le fait que les lames sont rectilignes et inclinées par rapport à la verticale en formant avec la direction du labour un angle de plus en plus grand lorsque l'on va du haut au bas de la lame (fig.4).

4. Engin selon la revendication 1, caractérisé par le fait que les lames ont une partie verticale (6) en forme de coutre qui est prolongée dans le bas par une partie sensiblement horizontale (7) qui est inclinée vers le bas en direction du labour de manière à provoquer une désagrégation de la terre par soulèvement de cette dernière.

5. Engin selon l'une quelconque des revendications précédentes, caractérisé par le fait que chaque lame comporte un soc (2,8) à son extrémité (8).

## Claims

1. Ploughing machine which includes, in combination, a plurality of blades (1) intended to dig into the ground, the upper part (1a) of which is parallel to the direction of ploughing, and the lower part (1b) of which is offset laterally so as to break up the soil over the top of the blade and bulk it up; and tubes (3) incorporated into each of the blades (1) which allow a volatile product to be conveyed to one or more points (5,9) located at the bottom part of each blade.

2. Machine according to Claim 1, characterized in that the blades (1) have a shape such that from the top towards the bottom of the blade the blade diverges further and further from the vertical plane of the top part (1a) of the blade and makes an increasingly pronounced angle with this plane.

3. Machine according to Claim 1 or 2, characterized in that the blades are straight and inclined with respect to the vertical, forming an increasingly large angle with the direction of ploughing, when looking from the top towards the bottom of the blade (fig.4).

4. Machine according to Claim 1, characterized in that the blades have a vertical part (6) in the shape of a coulter which is extended at the bottom by a substantially horizontal part (7) which is inclined downwards in the direction of ploughing so that by lifting the earth up, clumps of earth are broken up.

5. Machine according to any one of the preceding claims, characterized in that each blade has a plough-share (2,8) at its end (8).

## Patentansprüche

1. Erdbearbeitungsgerät, das in Kombination eine Anzahl von Blättern (1), die zum Eindringen in den Boden bestimmt sind, deren oberer Bereich (1a) parallel zur Bearbeitungsrichtung liegt und deren unterer Bereich (1b) seitlich derart versetzt ist, daß das Gelände unterhalb des Blattes aufgebrochen und dessen Auflockerung erreicht wird; und Rohre (3) umfaßt, die in jedes Blatt (1) eingearbeitet sind und die es gestatten, ein flüchtiges Produkt an einen oder mehreren Punkten (5,9) im unteren Bereich jedes Blattes abzugeben.

2. Gerät nach Anspruch 1, dadurch **gekennzeichnet**, daß die Blätter (1) eine derartige Form haben, daß sie von oben nach unten, bezogen auf die Blätter, sich mehr und mehr von der senkrechten Ebene des oberen Bereichs (1a) des Blattes entfernen und mit dieser Ebene einen mehr und mehr zunehmenden Winkel bilden.

3. Gerät nach Anspruch 1 oder 2, dadurch **gekennzeichnet**, daß die Blätter geradlinig und geneigt in bezug auf die Senkrechte sind und mit der Bearbeitungsrichtung einen Winkel bilden, der mehr und mehr von oben nach unten in bezug auf das Blatt zunimmt (Fig. 4).

4. Gerät nach Anspruch 1, dadurch **gekennzeichnet**, daß die Blätter einen senkrechten Abschnitt (6) in der Form eines Pflugmessers umfassen, das nach unten durch einen im wesentlichen waagerechten Abschnitt (7) verlängert ist, der nach unten in Bearbeitungsrichtung derart geneigt ist, daß eine Lösung des Bodens durch Anheben des Bodens erreicht wird.

5. Gerät nach einem der vorhergehenden Ansprüche, dadurch **gekennzeichnet**, daß jedes Blatt an seinem Ende (8) ein Pflugschar (2,8) umfaßt.
